# EUROPÄISCHE PATENTSCHRIFT

(11) **EP 0 770 756 B1**
(45) Veröffentlichungstag und Bekanntmachung des Hinweises auf die Patenterteilung: **24.11.1999**
(21) Anmeldenummer: 96890149.6
(22) Anmeldetag: 25.09.1996
(51) Int. Cl.: E06B 3/673

(54) **Vorrichtung zum Umsetzen von Isolierglasscheiben**
Device for moving sheets of insulating glazings
Dispositif pour déplacer des panneaux de vitres isolantes

(30) Priorität: 13.10.1995 AT 170095
(43) Veröffentlichungstag der Anmeldung: 02.05.1997
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred, Dipl.-Ing.

(56) Entgegenhaltungen:
- EP-A- 0 122 405
- EP-A- 0 538 233
- EP-A- 0 603 151
- WO-A-95/25688
- DE-A- 3 038 425
- DE-A- 3 322 801
- FR-A- 2 449 222

## Beschreibung

Die Erfindung betrifft eine Anordnung Umsetzen von Isolierglasscheiben aus einer Versiegelungsvorrichtung in einen Fächerwagen, wobei die Versiegelungsvorrichtung an einem höhenverstellbaren Balken montierte und um im wesentlichen lotrechte Achsen frei drehbare Rollen zum Abstützen des oberen Randes einer Isolierglasscheibe und eine Fördervorrichtung aufweist, die am unteren Rand der Isolierglasscheibe angreift und die Isolierglasscheibe auch seitlich führt, und wobei der Fächerwagen mehrere Fächer aufweist, die durch vorzugsweise schräg verlaufende, schnurartige Elemente begrenzt sind.

Als letzter Schritt beim Herstellen von Isolierglas werden Isolierglas-Rohlinge versiegelt, d.h. ihre Randfuge wird mit Versiegelungsmasse gefüllt. Für das Versiegeln von Isolierglasscheiben sind verschiedene Vorrichtungen bekannt geworden. Eine für den Transport von versiegelten Isolierglasscheiben besonders bewährte Vorrichtung ist aus der DE-OS 30 38 425 bekannt. Diese Vorrichtung besitzt einen mit Rollen bestückten Balken, an dem das Isolierglas mit seinem oberen Rand anliegt. Der Balken ist der Höhe nach verstellbar, um seine Lage an die Größe des Isolierglases anzupassen. Die Isolierglasscheibe wird unten von an zwei Endlosketten montierten, hakenförmigen Trägern gehalten. Diese Haken untergreifen das Isolierglas von außen her und lassen die Versiegelungsfuge frei, so daß die Versiegelungsmasse mit den Haken nicht in Berührung kommt.

Bislang werden versiegelte Isolierglasscheiben aus Versiegelungsvorrichtungen mit Hilfe von Hebezeugen, die mit Saugköpfen bestückt sind, oder einfach von Hand aus entnommen.

Bekannt (EP-A 603 151) sind auch Fächerwagen, die in einem Gestell mehrere schräg verlaufende, stab- oder schnurartige, gespannte Elemente aufweisen, welche die Fächer begrenzen. Bei diesem Fächerwagen ist es bekannt jedes Fach unten mit Auflagern zu versehen und den Fächern heb- und senkbare Rollen zuzuordnen, die beim Einlaufen einer Glasscheibe angehoben werden, so daß die Rollen höher als die in den Fächern unten vorgesehenen Auflager angeordnet sind.

Es ist für solche Fächerwagen auch bekannt, die schnurartigen Elemente mit an den schnurartigen Elementen drehbar angeordneten Rohrstücken oder Hülsen zu bestücken, damit Glasscheiben beim Einschieben an den schnurartigen Elementen nicht reiben, sondern an den Hülsen abrollen können.

Der Erfindung liegt die Aufgabe zugrunde, eine Anordnung zum Versiegeln von Isolierglasscheiben so weiterzubilden, daß versiegelte Isolierglasscheiben einfach in einen neben der Versiegelungsvorrichtung abgestellten Fächerwagen eingeschoben werden können.

Erfindungsgemäß ist hiezu vorgesehen, daß ein über den auslaufseitigen Rand der Versiegelungsvorrichtung vorstehender Ausleger vorgesehen ist, an dem um im wesentlichen lotrechte Achsen frei drehbare Rollen vorgesehen sind, daß der Ausleger in Höhenrichtung verstellbar ist, und daß in dem Fach, in das jeweils eine Isolierglasscheibe eingeschoben werden soll, Rollen mit V-förmigen Umfangsflächen vorgesehen sind, die um quer zur Förderrichtung verlaufende Achsen drehbar sind, wobei die Rollen in eine Wirklage, in der sie über im Fach vorgesehene Auflager vorstehen, anhebbar und in eine Bereitschaftsstellung, in der sie tiefer als die Auflager angeordnet sind, absenkbar sind.

Mit der erfindungsgemäßen Anordnung können versiegelte Isolierglasscheiben unten von dem an ihrem unteren Rand angreifenden Fördermittel der Versiegelungsvorrichtung und oben durch die Verlängerung (Ausleger) des mit Rollen bestückten Balkens gestützt, vorzugsweise unmittelbar, in eines der Fächer eines Fächerwagens eingeschoben werden. Nachdem dies ausgeführt ist, wird der Fächerwagen quer zur Förderebene der Isolierglasscheiben so verstellt, daß das als nächstes zu beschickende Fach gegenüber der Förderebene der Versiegelungsvorrichtung ausgerichtet ist.

Jedes der Fächer des Fächerwagens kann mit heb- und senkbaren, vorzugsweise frei drehbaren, Rollen ausgestattet sein, die vorzugsweise zwischen fixen Auflagern für Isolierglasscheiben vorgesehen sind, oder aber es ist ein einziger Balken mit Rollen vorgesehen, der in der Förderebene von Isolierglasscheiben angeordnet ist, so daß der mit Rollen bestückte Balken gegenüber dem unteren Rand des Faches ausgerichtet ist, das beschickt werden soll, und das durch Verschieben des Fächerwagens in der Förderebene ausgerichtet ist.

Vorzugsweise haben die Rollen, die dem unteren Rand eines Faches zugeordnet werden, V-förmige Umfangsflächen. Daher stehen die Glasscheiben der Isolierglasscheiben lediglich mit ihren Außenkanten auf den Flanken der V-Nut der Rollen und frische Versiegelungsmasse kommt mit den Rollen nicht in Berührung.

Auch die jedem Fach des Fächerwagens zugeordneten fixen Auflager sind oben V-förmig ausgebildet, damit Versiegelungsmasse nicht berührt wird, wenn eine Isolierglasscheibe in einem Fach steht, nachdem die Rollen abgesenkt worden sind.

Alternativ kann die Anordnung mit dem Balken und den Rollen für den Fächerwagen auf einem Gestell montiert sein, auf dem der Fächerwagen der mit Isolierglasscheiben zu beschicken ist, abgestellt wird. Durch Verstellen des Trägers für den Fächerwagen kann dieser gegenüber der Förderebene der Versiegelungsvorrichtung ausgerichtet werden. Dabei behält der mit Rollen bestückte Balken, wenn nur ein Balken vorgesehen ist, seine Lage gegenüber der Förderebene der Versiegelungsvorrichtung bei, so daß er immer gegenüber dem Fach ausgerichtet ist, in das Isolierglasscheiben einzuschieben sind.

Weitere Einzelheiten und Merkmale der Erfindung ergeben sich aus der nachstehenden Beschreibung eines bevorzugten Ausführungsbeispiels. Es zeigt
Fig. 1 schematisch die Seitenansicht der Auslaufsektion einer Versiegelungsvorrichtung für Isolierglasscheiben mit einem daneben aufgestelltem Fächerwagen,
Fig 2 einen Fächerwagen in Schrägansicht (Detail) und
Fig. 3 bis 5 weitere Einzelheiten des Fächerwagens.

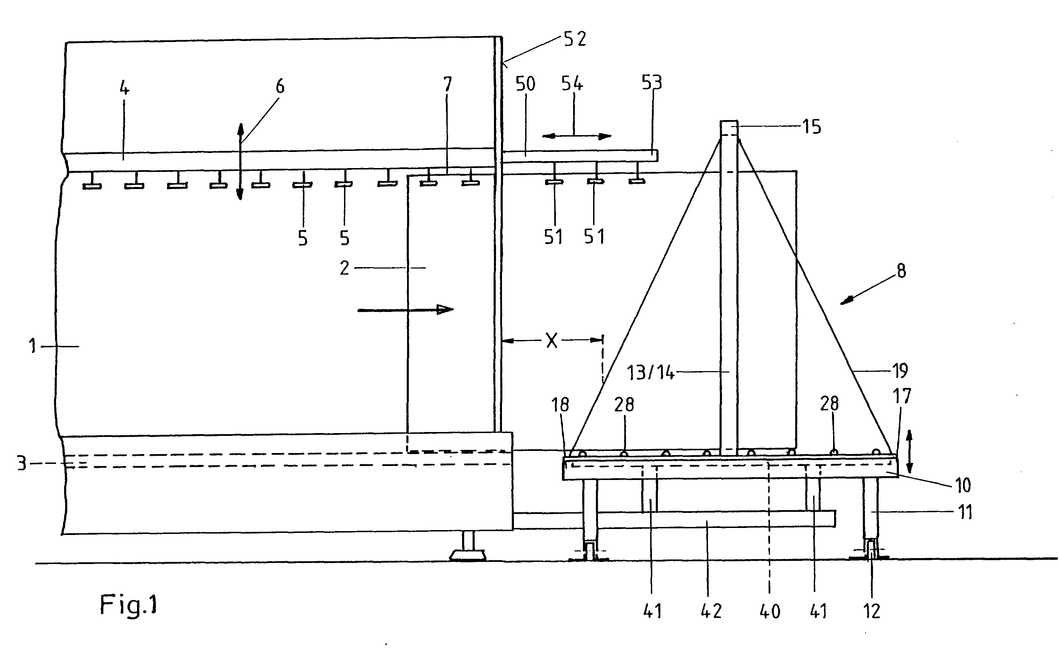

Die Versiegelungsvorrichtung kann insbesondere in ihrer Auslaufsektion, die in Fig. 1 gezeigt ist, so wie aus der DE-OS 30 38 425 oder der EP 538 233 A bekannt, ausgebildet sein. Die Versiegelungsvorrichtung besitzt ein Maschinengestell 1, in dem unten eine Fördervorrichtung 3 vorgesehen ist, die am unteren Rand einer Isolierglasscheibe 2 angreift. Als seitliche Abstützung für die Isolierglasscheibe 2 ist ein Balken 4 mit frei drehbaren Rollen 5 vorgesehen, der im Maschinengestell 1 auf und ab (Pfeil 6) verstellbar ist, damit die Rollen 5 gegenüber dem oberen Rand 7 einer Isolierglasscheibe 2 ausgerichtet werden können. Die Fördervorrichtung 3, die in der Versiegelungsvorrichtung, insbesondere deren Auslaufsektion, am unteren Rand einer Isolierglasscheibe 2 angreift, besteht vorzugsweise aus zwei endlosen (Rollen-)Ketten, an welchen Haken befestigt sind, deren horizontale Schenkel aufeinander zu weisen, und die Isolierglasscheiben 2 von außen her untergreifen, die Versiegelungsmasse aber nicht berühren. Die Haken können auf maschinengestellfesten Führungsschienen geführt sein und an den Außenflächen einer Isolierglasscheibe 2 angreifende Druckbacken aufweisen.

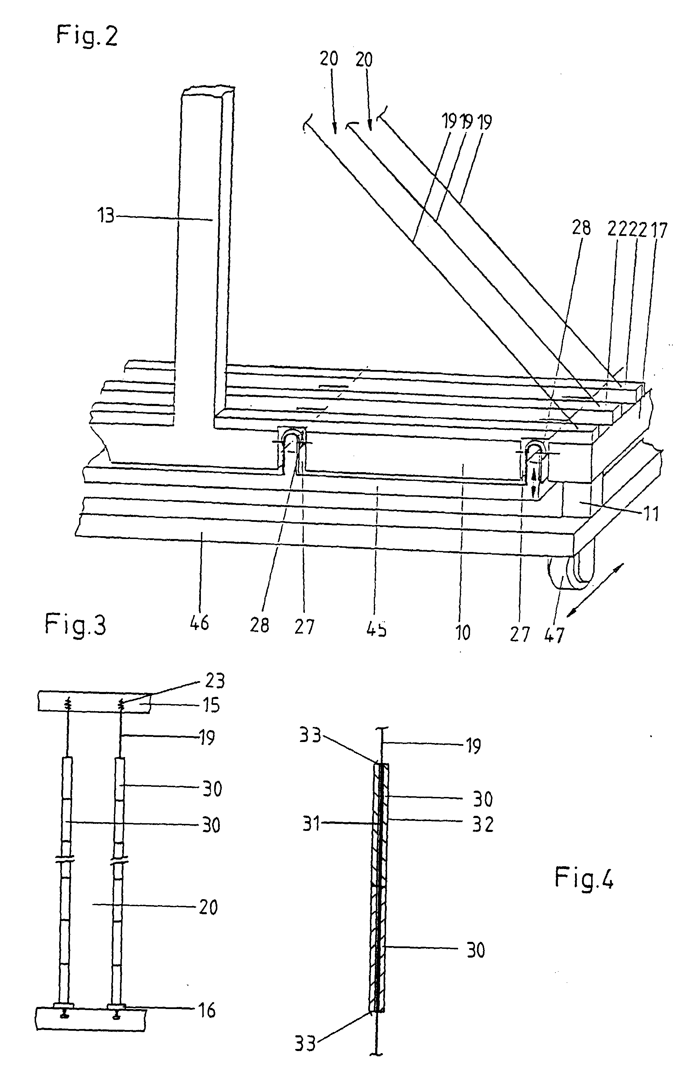

Neben dem auslaufseitigen Ende 52 der Versiegelungsvorrichtung ist ein Fächerwagen 8 aufgestellt, der in Ausführungsbeispielen in den Fig. 2 bis 5 gezeigt ist.

Der Fächerwagen 8 besteht aus einer Bodenplatte 10, die an ihrer Unterseite Füße 11 aufweist. Die Füße 11 können, so wie in Fig. 1 gezeigt, mit Rollen 12 bestückt sein, wobei wenigstens ein Teil der Rollen 3 als Lenkrollen ausgebildet sein kann.

Von der Bodenplatte 10 ragen Steher 13 und 14 nach oben und tragen an ihren oberen Enden einen Balken 15, der parallel zur Bodenplatte 10 ausgerichtet ist.

Zwischen den Längsrändern 17 und 18 der Bodenplatte 10 und dem Balken 15 sind stab- oder schnurartige Elemente 19 gespannt, die zwischen sich jeweils ein Fach 20 bilden, in das eine Isolierglasscheibe 2 eingeschoben werden kann. Über die stab- oder schnurartigen Elemente 9 sind wie in den Fig. 3 und 4 dargestellt Rohrstücke 30 gesteckt, die weiter unten näher beschrieben werden.

Es ist auch eine Ausführungsform möglich, bei der die stab- oder schnurartigen Elemente 19 vom Balken 16 nur nach einer Seite, d.h. zum Längsrand 18 der Bodenplatte 10 hin gespannt sind. Bei dieser Ausführungsform sind die Steher 13 und 14 bevorzugt an einem der Längsränder der Bodenplatte 10, d.h. in zwei Ecken derselben, angeordnet.

Die stab- oder schnurartigen Elemente 19 sind beispielsweise Stahlseile, die wie dies an sich aus der EP 477 163 A bekannt ist, durch Federn 23 und Muttern vorgespannt werden können.

Im Bereich jedes Faches 10 sind an der Oberseite der Bodenplatte 10 Auflager 21 vorgesehen, die beidseits von Leisten 22 begrenzt sein können. Die Auflager 21 besitzen eine V-förmige Oberseite 24, so daß in den Fächern 20 abgestellte Isolierglasscheiben 2, die mit ihrer oberen Kante an dem einen oder anderen stab- oder schnurförmigen Element 19, das ein Fach 20 begrenzt, anliegen, nur mit ihren Außenkanten auf den Auflagern 21 aufstehen.

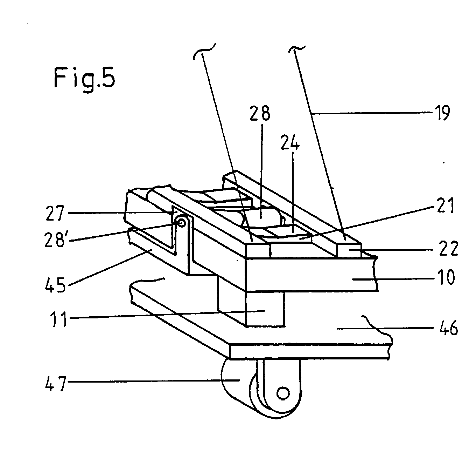

Wie aus Fig. 2 und 5 ersichtlich ist, sind in der Bodenplatte 10 quer zu den Leisten 22 verlaufende, nach unten offene Ausnehmungen 27 vorgesehen, in welchen Rollen 28 mit V-förmiger Umfangsfläche aufgenommen sind. Die Rollen 28 können so weit hochgehoben werden, daß sie über die Auflager 21 vorstehen, so daß Isolierglasscheiben 2 in die oder aus den Fächern 20 gefördert werden können.

Die Rollen 28 sind im in Fig. 2 dargestellten Ausführungsbeispiel an einem Rahmen 45 befestigt, der über Druckmittelzylinder relativ zur Bodenplatte 1 verstellbar ist, so daß die Rollen 28 auf und ab bewegt werden können.

Bei dem in Fig. 1 dargestellten Ausführungsbeispiel sind die Rollen 28 an einem einzigen Balken 40 angeordnet. Die Rollen 28 drehen sich um Achsen quer zur Längserstreckung des Balkens 40. Der Balken 40, der in der Verlängerung der Fördervorrichtung 3 ausgerichtet ist, ist z.B. über Druckmittelzylinder 41 heb- und senkbar. Die Druckmittelzylinder 41 können an einem Träger 42, der in Förderrichtung verschiebbar sein kann, montiert sein.

Der Fächerwagen steht in Fig. 2 und 5 mit seinen Füßen 11 auf einem Grundrahmen 46. Der Grundrahmen 46 weist Laufrollen 47 auf, von denen wenigstens ein Paar als Lenkrollen ausgebildet sein kann. Auf diese Weise ist die Vorrichtung mit den Fächern 20 entweder für sich alleine (Fig. 1) oder über den Grundrahmen 46 (Fig. 2) verfahrbar und kann gegenüber der vorgelagerten Fördereinrichtung 3 der Versiegelungsvorrichtung positioniert werden, so daß Isolierglasscheiben 2 nach beliebigen Ordnungskriterien sortiert in Fächer 20 abgestellt werden können.

In den Fig. 3 und 4 ist ein stab- oder schnurartiges Element 19 mit darüber geschobenen, zylinderförmigen Rohrstücken 30, die in den Fig. 1 und 2 nicht eingezeichnet wurden, in vergrößertem Maßstab dargestellt.

Die Rohrstücke 30 weisen die Form einer Hülse mit einer Bohrung 31 und einem zylinderförmigen Außenmantel 32 auf und liegen über ihre zu ihrer Längsachse senkrecht ausgerichtete Stirnflächen 33 lose aneinander an. Die Rohrstücke 30 sind vorzugsweise aus Kunststoff hergestellt.

Das unterste Rohrstück 30 liegt, wie in Fig. 3 dargestellt ist, auf der Leiste 22 auf. Das oberste Rohrstück 30 ist vom Balken 15 bzw. den Federn 23 wenigstens so weit beabstandet wie der Hub der Rollen 28 beträgt.

Stößt bzw. liegt eine Isolierglasscheibe 2 beim Hinein- oder Herausschieben an einem Rohrstück 30 an, so kann sich dieses frei auf seinem stab- oder schnurartigen Element 19 drehen, so daß es an der Isolierglasscheibe 2 abrollt und von dieser nicht aufgeschnitten oder sonst beschädigt wird.

Wird eine Isolierglasscheibe 2 durch die Rollen 28 hochgehoben, während sie mit ihrem oberen Rand 7 an einem Rohrstück 30 anliegt, dann wird dieses Rohrstück 30 zusammen mit allen darüber angeordneten Rohrstücken 30 nach oben geschoben, ohne daß es zu einer die Rohrstücke 30 beschädigenden Relativbewegung zwischen diesen und der Isolierglasscheibe 2 kommt und ohne daß die Hubbewegung der Isolierglasscheibe 2 behindert wird.

Wie aus Fig. 5 ersichtlich ist, sind die auf Achsen 28'angeordneten Rollen 28, auf welchen eine Isolierglasscheibe 2 in ein Fach 20 des Fächerwagens 8 eingeschoben wird, mit einer V-förmigen Umfangsfläche ausgestattet, so daß die Versiegelungsmasse, die im Zeitpunkt des Einschiebens der Isolierglasscheibe 2 in den Fächerwagen 8 noch nicht ausgehärtet ist, mit der Umfangsfläche der Rollen 28 nicht in Berührung kommt.

Zu diesem Zweck sind auch die Auflager 21 im Fächerwagen 8, auf welchen die Isolierglasscheibe 2 dann aufsteht, oben (Oberfläche 24) V-förmig ausgebildet.

Über den auslaufseitigen Rand 52 der Versiegelungsvorrichtung steht ein in Richtung auf den neben der Versiegelungsvorrichtung aufgestellten Fächerwagen 8 frei auskragender Ausleger 50 vor. An den Ausleger 50 sind um im wesentlichen lotrechte Achsen frei drehbare Rollen 51 gelagert. Der Ausleger 50 ist zusammen mit dem Balken 4 der Versiegelungsvorrichtung höhenverstellbar, vorzugsweise mit diesem einstückig ausgebildet, oder mit diesem starr verbunden.

Der Ausleger 50 kann in einer Ausführungsform so ausgebildet sein, daß der Abstand seines freien Endes 53 vom auslaufseitigen Rand 52 der Versiegelungsvorrichtung verändert werden kann. Hiezu kann der Ausleger 50 aus zwei oder mehreren relativ zueinander verschiebbaren, z.B. teleskopartig ineinanderschiebbaren Teilen bestehen. Der Ausleger 50 kann auch insgesamt in Richtung des Doppelpfeiles 54 von Fig. 1 verschiebbar am Maschinengestell 1 oder bevorzugt am Balken 4 montiert sein.

Zweckmäßig ist es, wenn der Überstand des Auslegers 50 über den auslaufseitigen Rand 52 der Versiegelungsvorrichtung wenigstens so groß ist wie der Abstand "X" der stab- oder schnurartigen Elemente 19 des Fächerwagens 8 vom Rand 52 der Versiegelungsvorrichtung in einer Höhe, die der Höhe der kleinsten der üblichen Isolierglasscheiben 2 (etwa 20cm) entspricht.

Es ist ersichtlich, daß insbesondere, wenn die Transportvorrichtung 3, die am unteren Ende der Isolierglasscheibe angreift, wie aus der DE-OS 30 38 425 bekannt ausgebildet ist, der über den auslaufseitigen Rand 52 der Versiegelungsvorrichtung vorstehende Ausleger 50 nicht so lang sein muß, daß er in die Fächer 20 des Fächerwagens 8 hineinreicht, da die Isolierglasscheibe 2 von der an ihr unten angreifenden Fördervorrichtung 3 geführt wird, und beispielsweise durch die hakenförmigen Auflager und die diesen zugeordneten Druckbacken hinreichend stabilisiert ist, so daß sie auch dann sicher geführt ist, wenn der Ausleger 50 nur so lang ist, daß er bis vor ein Fach 20 des Fächerwagens 8 reicht. Bei von schrägen, schnurartigen Elementen des Fächerwagens 8 gebildeten Fächern 20, wie sie bei dem im Ausführungsbeispiel gezeigten Fächerwagen 8 vorgesehen sind, genügt es, wenn der Ausleger 50 wenigstens so lang ist, daß er den Abstand (Strecke X in Fig. 1) des nächstliegenden Punktes eines schnurartigen Elementes 19 in der Höhe der kleinsten abzustapelnden Isolierglasscheibe 2 zum auslaufseitigen Rand 52 der Versiegelungsvorrichtung überbrückt. Dies, weil eine Isolierglasscheibe 2 beim Einschieben in den Fächerwagen oben von dessen schnurartigen Elementen 19, die mit den frei drehbaren Hülsen 30 bestückt sind, und unten von den V-förmigen Rollen 28 sicher geführt wird.

Zusammenfassend kann ein Ausführungsbeispiel der Erfindung wie folgt beschrieben werden:

Zum Umsetzen von versiegelten Isolierglasscheiben 2 aus einer Versiegelungsvorrichtung, die an einem höhenverstellbaren Balken 4 montierte und um im wesentlichen lotrechte Achsen frei drehbare Rollen 5 zum Abstützen des oberen Randes 7 der Isolierglasscheibe 2 und eine Fördervorrichtung 3 aufweist, die am unteren Rand der Isolierglasscheibe 2 angreift und die Isolierglasscheibe 2 auch seitlich führt, in einen Fächerwagen 8, der mehrere Fächer 20 aufweist, die durch vorzugsweise schräg verlaufende, schnurartige Elemente 19 begrenzt sind, ist ein über den auslaufseitigen Rand 52 der Versiegelungsvorrichtung frei auskragender Ausleger 50 vorgesehen, an dem um im wesentlichen lotrechte Achsen frei drehbare Rollen 51 vorgesehen sind. Der Ausleger 50 ist in Höhenrichtung (Pfeil 6) verstellbar. Dem Fach 20, in das eine Isolierglasscheibe 2 eingeschoben werden soll, sind auf einem Balken 40 oder Rahmen 45 montierte Rollen 28 mit V-förmigen Umfangsflächen zugeordnet, die um quer zur Förderrichtung verlaufende Achsen drehbar sind. Die Rollen 28 sind anheb- und absenkbar, um sie in eine Wirklage, in der sie höher als im Fach 20 vorgesehene Auflager, die V-förmige, obere Endflächen aufweisen, angeordnet sind, und in eine Bereitschaftsstellung, in der sie tiefer als die Auflager angeordnet sind, verstellen zu können.

## Patentansprüche

1. Anordnung zum Umsetzen von Isolierglasscheiben (2) aus einer Versiegelungsvorrichtung in einen Fächerwagen (8), umfassend eine Versiegelungsvorrichtung und einen Fächerwagen, wobei die Versiegelungsvorrichtung an einem höhenverstellbaren Balken (4) montierte und um im wesentlichen lotrechte Achsen frei drehbare Rollen (5) zum Abstützen des oberen Randes (7) einer Isolierglasscheibe (2) und eine Fördervorrichtung (3) aufweist, die am unteren Rand der Isolierglasscheibe (2) angreift und die Isolierglasscheibe (2) auch seitlich führt, und wobei der Fächerwagen (8) mehrere Fächer (20) aufweist, die durch schnurartige Elemente (19) begrenzt sind, dadurch gekennzeichnet, daß ein über den auslaufseitigen Rand (52) der Versiegelungsvorrichtung vorstehender Ausleger (50) vorgesehen ist, an dem um im wesentlichen lotrechte Achsen frei drehbare Rollen (51) vorgesehen sind, daß der Ausleger (50) in Höhenrichtung (Pfeil 6) verstellbar ist, und daß in dem Fach (20), in das eine Isolierglasscheibe jeweils (2) eingeschoben werden soll, Rollen (28) mit V-förmigen Umfangsflächen vorgesehen sind, die um quer zur Förderrichtung verlaufende Achsen drehbar sind, wobei die Rollen (28) in eine Wirklage, in der sie über im Fach vorgesehene Auflager (21) vorstehen, anhebbar und in eine Bereitschaftsstellung, in der sie tiefer als die Auflager (21) angeordnet sind, absenkbar sind.

2. Anordnung nach Anspruch 1, dadurch gekennzeichnet, daß die Auflager (21) in den Fächern V-förmige, obere Endflächen (24) aufweisen.

3. Anordnung nach Anspruch 1 oder 2, dadurch gekennzeichnet, daß die Rollen (28) auf einem Balken (40) oder Rahmen (45) montiert sind, der anheb- und absenkbar ist.

4. Anordnung nach Anspruch 3, dadurch gekennzeichnet, daß ein einziger anheb- und absenkbarer, stabförmiger Balken (40) für die Rollen (28) vorgesehen ist, der in der Förderebene der Versiegelungsvorrichtung angeordnet ist.

5. Anordnung nach Anspruch 4, dadurch gekennzeichnet, daß der Balken (40) an einem Träger (42) des Maschinengestells (1) der Versiegelungsvorrichtung anheb- und absenkbar montiert ist.

6. Anordnung nach Anspruch 4 oder 5, dadurch gekennzeichnet, daß der Balken (40) für die Rollen (28) aus einer über den auslaufseitigen Rand (52) der Versiegelungsvorrichtung überstehenden Wirkstellung in eine Bereitschaftsstellung zurückziehbar ist und umgekehrt.

7. Anordnung nach Anspruch 3, dadurch gekennzeichnet, daß ein gitter- oder rechenartiger Rahmen (45) vorgesehen ist, der gegenüber dem Fächerwagen (8) anheb- und absenkbar ist, und daß an dem Rahmen (45) in die Fächer (20) eingreifende V-förmig genutete Rollen (28) in mehreren gegenüber den Fächern (20) des Fächerwagens (8) ausgerichteten Reihen montiert sind.

8. Anordnung nach Anspruch 7, dadurch gekennzeichnet, daß der Rahmen (45) an einem Gestell (46) anheb- und absenkbar angeordnet ist, auf dem der mit Isolierglasscheiben (2) zu beladende Fächerwagen (8) abgestellt ist.

9. Anordnung nach einem der Ansprüche 1 bis 8, dadurch gekennzeichnet, daß der Ausleger (50) synchron mit dem mit Rollen (5) bestückten Balken (4) der Versiegelungsvorrichtung heb- und senkbar ist.

10. Anordnung nach Anspruch 9, dadurch gekennzeichnet, daß der Ausleger (50) mit dem Balken (4) der Versiegelungsvorrichtung verbunden ist.

11. Anordnung nach einem der Ansprüche 1 bis 10, dadurch gekennzeichnet, daß der Abstand des freien Endes (53) des Auslegers (50) vom auslaufseitigen Rand (52) der Versiegelungsvorrichtung wenigstens so groß ist wie der Abstand (X) der die Fächer (20) des Fächerwagens (8) begrenzenden schnurartigen Elemente (19) von diesem Rand (52).

12. Anordnung nach Anspruch 11, dadurch gekennzeichnet, daß der Abstand (x) des freien Endes (53) des Auslegers (50) vom auslaufseitigen Rand (52) der Versiegelungsvorrichtung wenigstens so groß ist wie der Abstand der die Fächer (20) des Fächerwagens (8) begrenzenden schnurartigen Elemente (19), die in der Förderebene schräggestellt sind, von diesem Rand (52), in einer der Höhe der kleinsten abzustapelnden Isolierglasscheibe (2).

13. Anordnung nach einem der Ansprüche 1 bis 12, dadurch gekennzeichnet, daß der Abstand des freien Endes (53) des Auslegers (50) vom auslaufseitigen Rand (52) der Versiegelungsvorrichtung veränderbar ist.

14. Anordnung nach Anspruch 13, dadurch gekennzeichnet, daß der Ausleger (50) längenveränderbar ist und vorzugsweise aus wenigstens zwei relativ zueinander verschiebbaren Teilen besteht.

15. Anordnung nach Anspruch 13, dadurch gekennzeichnet, daß der Ausleger (50) gegenüber dem Balken (4) der Versiegelungsvorrichtung in Förderrichtung verschiebbar ist.

## Claims

1. Arrangement for moving sheets of insulating glazings (2) out of a sealing device into a racked trolley (8), said arrangement comprising a sealing device and a racked trolley, the sealing device having rollers (5) which are mounted on a height-adjustable beam (4) and are freely rotatable about substantially perpendicular axes for supporting the upper edge (7) of a sheet of insulating glazing (2) and having a feeding device (3) which engages at the lower end of the sheet of insulating glazing (2) and also guides the sheet of insulating glazing (2) sideways, and the racked trolley (8) having several compartments (20) which are delimited by cord-like elements (19), characterised in that an extension arm (50) is provided which projects over the output-side edge (52) of the sealing device, on which extension arm (50) rollers (51) are provided which are freely rotatable about substantially perpendicular axes, in that the extension arm (50) is adjustable height-wise (arrow 6) and in that rollers (28) with V-shaped circumferential faces are provided in the compartment (20) into which one sheet of insulating glazing (2) respectively should be inserted, which rollers (28) are rotatable about axes which extend transversely relative to the feeding direction, the rollers (28) being raisable into an operating position in which they project over supports (21) provided in the compartment and being lowerable into a stand-by position in which they are arranged lower than the supports (21).

2. Arrangement according to claim 1, characterised in that the supports (21) in the compartments have V-shaped, upper end faces (24).

3. Arrangement according to claim 1 or 2, characterised in that the rollers (28) are mounted on a beam (40) or frame (45) which is raisable or lowerable.

4. Arrangement according to claim 3, characterised in that a single raisable and lowerable, bar-shaped beam (40) is provided for the rollers (28), which beam is arranged in the feeding plane of the sealing device.

5. Arrangement according to claim 4, characterised in that the beam (40) is mounted on a carrier (42) of the machine frame (1) of the sealing device in a raisable and lowerable manner.

6. Arrangement according to claim 4 or 5, characterised in that the beam (40) for the rollers (28) can be withdrawn from an operating position, in which it projects over the output-side edge (52) of the sealing device, into a stand-by position and vice versa.

7. Arrangement according to claim 3, characterised in that a lattice- or grid-like frame (45) is provided, which is raisable and lowerable relative to the racked trolley (8), and in that rollers (28), which engage in the compartments (20) and are grooved in a V-shape, are mounted on the frame (45) in several rows which are aligned relative to the compartments (20) of the racked trolley (8).

8. Arrangement according to claim 7, characterised in that the frame (45) is arranged in a raisable and lowerable manner on a rolling stand (46), on which the racked trolley (8) to be loaded with sheets of insulating glazings (2) is deposited.

9. Arrangement according to one of the claims 1 to 8, characterised in that the extension arm (50) is raisable and lowerable in synchronisation with the beam (4) of the sealing device, which beam is fitted with rollers (5).

10. Arrangement according to claim 9, characterised in that the extension arm (50) is connected to the beam (4) of the sealing device.

11. Arrangement according to one of the claims 1 to 10, characterised in that the spacing of the free end (53) of the extension arm (50) from the output-side edge (52) of the sealing device is at least as large as the spacing (X) of the cord-like elements (19), which delimit the compartments (20) of the racked trolley (8), from this edge (52).

12. Arrangement according to claim 11, characterised in that the spacing (X) of the free end (53) of the extension arm (50) from the output-side edge (52) of the sealing device is at least as large as the spacing (X) of the cord-like elements (19) delimiting the compartments (20) of the racked trolley (8) from this edge (52), which elements are inclined in the feeding plane, at the height of the smallest sheet of insulating glazing (2) to be stacked.

13. Arrangement according to one of the claims 1 to 12, characterised in that the spacing of the free end (53) of the extension arm (50) from the output-side edge (52) of the sealing device is alterable.

14. Arrangement according to claim 13, characterised in that the extension arm (50) is alterable longitudinally and preferably comprises at least two parts which are displaceable relative to each other.

15. Arrangement according to claim 13, characterised in that the extension arm (50) is displaceable in the feeding direction relative to the beam (4) of the sealing device.

## Revendications

1. Dispositif pour déplacer des panneaux de vitres isolantes (2) d'un dispositif de scellage vers un chariot compartimenté (8), comprenant un dispositif de scellage et un chariot compartimenté, le dispositif de scellage présentant des galets (5) qui sont montés sur une poutre (4) réglable en hauteur et peuvent tourner librement autour d'axes essentiellement verticaux, pour supporter le bord supérieur (7) d'un panneau de vitre isolante (2) ainsi qu'un dispositif de transport (3) qui agit au niveau du bord inférieur du panneau de vitre isolante (2) et guide également latéralement ledit panneau de vitre isolante (2), le chariot compartimenté (8) comportant plusieurs compartiments (20) qui sont séparés par des éléments (19) en forme de cordons, caractérisés par le fait qu'il est prévu un bras (50) qui fait saillie au-delà du bord (52) côté sortie du dispositif de scellage et sur lequel sont disposés des galets (51) tournant librement autour d'axes essentiellement verticaux, par le fait que le bras (50) est réglable en hauteur (flèche 6) et par le fait que dans le compartiment (20), dans lequel doit être chargé chaque fois un panneau de vitre isolante (2), sont prévus des galets (28) à surfaces périphériques en forme de V, qui peuvent tourner autour d'axes perpendiculaires à la direction de transport, les galets (28) pouvant être soulevés dans une position active, dans laquelle ils sont situés à un niveau plus élevé que des appuis-supports (21) prévus dans le compartiment, et abaissés dans un position de repos, dans laquelle ils sont situés au dessous du niveau desdits appuis-supports.

2. Dispositif selon la revendication 1, caractérisé par le fait que les appuis-supports (21) dans les compartiments présentent des surfaces d'extrémité supérieures (24) en forme de V.

3. Dispositif selon la revendication 1 ou 2, caractérisé par le fait que que les galets (28) sont montés sur une poutre (40) ou sur un cadre (45) qui peut être soulevé et abaissé.

4. Dispositif selon la revendication 3, caractérisé par le fait qu'il est prévu une poutre (40) unique, soulevable et abaissable, en forme de barre, pour les galets (28), qui est disposée dans le plan de transport du dispositif de scellage.

5. Dispositif selon la revendication 4, caractérisé par le fait que la poutre (40) est montée de manière à pouvoir être soulevée et abaissée sur un support (42) du bâti de machine (1) du dispositif de scellage.

6. Dispositif selon la revendication 4 ou 5, caractérisé par le fait que la poutre (40) pour les galets (28) peut être rentrée dans une position de repos à partir d'une position active avancée par rapport au bord (52) côté sortie du dispositif de scellage et inversement.

7. Dispositif selon la revendication 3, caractérisé par le fait qu'il est prévu un cadre (45) en forme de râteau ou de treillis qui peut être soulevé et abaissé par rapport au chariot compartimenté (8j et par le fait que des galets (28) à gorge en V qui pénètrent dans les compartiments (20) sont montés sur le cadre (45) en plusieurs rangées alignées sur les compartiments (20) du chariot compartimenté (8).

8. Dispositif selon la revendication 7, caractérisé par le fait que le cadre (45) est monté de manière à pouvoir être soulevé et abaissé sur châssis (46), sur lequel repose le chariot compartimenté (8) à charger avec les panneaux de vitres isolantes (2).

9. Dispositif selon une des revendications 1 à 8, caractérisé par le fait que le bras (50) peut être soulevé et abaissé en synchronisme avec la poutre (4) munie des galets (5) du dispositif de scellage.

10. Dispositif selon la revendication 9, caractérisé par le fait que le bras (50) est lié à la poutre (4) du dispositif de scellage.

11. Dispositif selon une des revendications 1 à 10, caractérisé par le fait que la distance de l'extrémité libre (53) du bras (50) depuis le bord (52) côté sortie du dispositif de scellage est au moins aussi grande que la distance (X) par rapport audit bord (52) des éléments en forme de cordons (19) délimitant les compartiments (20) du chariot compartimenté (8) .

12. Dispositif selon la revendication 11, caractérisé par le fait que la distance (x) de l'extrémité libre (53) du bras (50) par rapport au bord (52) côté sortie du dispositif de scellage est au moins aussi grande que la distance des éléments en forme de cordons (19) délimitant les compartiments (20) du chariot compartimenté (8) qui sont inclinés dans le plan de transport, à partir du bord (52) jusqu'à une hauteur correspondant au plus petit panneau de vitre isolante (2) à déposer.

13. Dispositif selon une des revendications 1 à 12, caractérisé par le fait que la distance du bord libre (53) du bras (50) par rapport au bord (52) côté sortie du dispositif de scellage est réglable.

14. Dispositif selon la revendication 13, caractérisé par le fait que la longueur du bras (50) peut être modifiée et que le bras est formé de préférence de deux parties pouvant coulisser l'une par rapport à l'autre.

15. Dispositif selon la revendication 13, caractérisé par le fait que le bras (50) peut coulisser dans la direction de transport par rapport à la poutre (4) du dispositif de scellage.
